# EUROPEAN PATENT APPLICATION

(11) **EP 4 834 473 A1**
(43) Date of publication of application: **04.11.2026**
(21) Application number: 24913632.6
(22) Date of filing: 19.12.2024
(51) Int. Cl.: B01J 27/13, B01J 23/46, B01J 35/54, C25B 11/052, C25B 11/081, C25B 9/00, B01J 35/40, C25B 1/04

(54) **CATALYST FOR OXYGEN EVOLUTION REACTION IN WATER ELECTROLYSIS CELL AND PRODUCTION METHOD THEREFOR, AND MEMBRANE-ELECTRODE ASSEMBLY FOR WATER ELECTROLYSIS CELL AND WATER ELECTROLYSIS, EACH CELL COMPRISING CATALYST**

(30) Priority: 29.12.2023 KR 20230197617; 16.12.2024 KR 20240187314
(71) Applicant: Kolon Industries, Inc., Seoul 07793 (KR)
(72) Inventor: LIM, Youngjoon, Seoul 07793 (KR); KIM, Jun Young, Seoul 07793 (KR); KIM, Jung Ho, Seoul 07793 (KR); LEE, Ju Sung, Seoul 07793 (KR); PARK, Hyun Jin, Seoul 07793 (KR)
(74) Representative: Vossius & Partner Patentanwälte Rechtsanwälte mbB
(86) International application number: PCT/KR2024/020758
(87) International publication number: WO 2025/143689

(57) **Abstract**

Provided is a catalyst for an oxygen evolution reaction in a water electrolysis cell, the catalyst comprising: a carrier containing a fluorine-doped metal oxide; and water electrolysis catalyst particles located on the surface of the carrier and containing a fluorine-doped noble metal oxide, wherein in the entire fluorine-doped metal oxide, the content of fluorine is 1 at% to 20 at% relative to a total of 100 at% of the components as measured by high-resolution TEM, energy-dispersive X-ray spectroscopy analysis, and in the entire fluorine-doped noble metal oxide, the content of fluorine is 1 at% to 20 at% relative to a total of 100 at% of the components as measured by high-resolution TEM, energy-dispersive X-ray spectroscopy analysis.

## Description

### [Technical Field]

The present disclosure relates to a catalyst for an oxygen evolution reaction of a water electrolysis cell and a manufacturing method thereof, and a membrane-electrode assembly for a water electrolysis cell and a water electrolysis cell including the same.

This research was supported by the Ministry of Trade, Industry and Energy (MOTIE) and the Korea Institute of Energy Technology Evaluation and Planning (KETEP). (Project Number: 20223030040220)

### [Background Art]

Recent energy demands and the environments require sustainability, environmental friendliness, and high efficiency, and among them, hydrogen is drawing attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels. Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

Regarding a catalyst for water electrolysis, particularly a catalyst for an oxygen evolution electrode of polymer electrolyte membrane (PEM) water electrolysis, iridium black and iridium oxide powder have been used as catalysts for an oxygen evolution reaction used in a conventional PEM water electrolysis oxygen evolution electrode, but improvement of low dispersibility, low electrical conductivity, and instability thereof is required.

### [Disclosure]

### [Technical Problem]

Provided is a catalyst for an oxygen evolution reaction of a water electrolysis cell that may reduce an amount of a noble metal used, and be applied to a water electrolysis cell electrode to exhibit high electrochemical durability and conductivity even in a water electrolysis operating environment of high voltage and low pH.

### [Technical Solution]

In one embodiment, provided is a catalyst for an oxygen evolution reaction of a water electrolysis cell comprising: a support containing a fluorine-doped metal oxide; and water electrolysis catalyst particles positioned on a surface of the support and containing a fluorine-doped noble metal or a fluorine-doped noble metal oxide, wherein a content of fluorine is 1 at% to 20 at% based on a total of 100 at% of components measured by high-resolution TEM energy dispersive X-ray spectrum analysis in the entire fluorine-doped metal oxide, and a content of fluorine is 1 at% to 20 at% based on a total of 100 at% of components measured by high-resolution TEM energy dispersive X-ray spectrum analysis in the entire fluorine-doped noble metal or fluorine-doped noble metal oxide.

In another embodiment, provided is an oxygen evolution electrode comprising the catalyst for an oxygen evolution reaction of a water electrolysis cell.

In another embodiment, provided is a method of manufacturing an oxygen evolution electrode comprising: (i) mixing a metal oxide into a solution including a noble metal oxide precursor, and then drying it to manufacture a dried product; and (ii) mixing the dried product and a fluorine precursor, and then heat-treating the mixture to manufacture a catalyst for an oxygen evolution reaction of a water electrolysis cell; (iii) mixing the catalyst for an oxygen evolution reaction of a water electrolysis cell and an ionomer to manufacture a slurry; and (iv) dispersing the slurry.

In another embodiment, provided is a membrane-electrode assembly for a water electrolysis cell comprising: a polymer electrolyte membrane; the oxygen evolution electrode positioned on one surface of the polymer electrolyte membrane; and a hydrogen evolution electrode positioned on the other side of the polymer electrolyte membrane.

In another embodiment, provided is a water electrolysis cell comprising the membrane-electrode assembly for a water electrolysis cell.

### [Advantageous Effects]

A catalyst for an oxygen evolution reaction of a water electrolysis cell manufactured according to an embodiment may reduce an amount of a noble metal used, and be applied to a water electrolysis cell electrode to exhibit high electrochemical catalytic activity and conductivity even in a water electrolysis operating environment of high voltage and low pH.

### [Brief Description Of The Drawings]

FIG. 1 is a schematic view showing a membrane-electrode assembly (MEA) for a water electrolysis cell.
FIGS. 2 to 5 are a high-resolution TEM image and energy-dispersive X-ray spectroscopy (EDS) mapping TEM images of Example 1.
FIG. 6 is a graph illustrating water electrolysis performance of the membrane-electrode assemblies manufactured in Example 1, Example 3, Comparative Example 1, and Comparative Example 2.

### [Best Mode]

Hereinafter, specific embodiments will be described in detail so that those of ordinary skill in the art may easily practice them. However, the present invention may be embodied in many different forms and is not limited to the embodiments described herein.

The terms used herein are used only to describe exemplary embodiments, and are not intended to limit the present invention. A singular expression includes a plural expression unless the context clearly indicates otherwise.

The term "combination thereof" refers to a mixture, a laminate, a composite, a copolymer, an alloy, a blend, a reaction product, and the like of components.

In the present specification, terms such as "include", "comprise", or "have" are intended to designate the presence of implemented features, numbers, steps, components, or a combination thereof, and it should be understood that they do not preclude the possibility of the presence or addition of one or more other features, numbers, steps, components, or a combination thereof.

In the drawings, thicknesses are exaggerated to clearly express various layers and regions, and similar portions are denoted by the same reference numerals throughout the specification. When a portion such as a layer, a membrane, a region, or a plate is referred to as being "on" or "above" another portion, it includes not only a case in which the portion is "directly on" another portion but also a case in which another portion is present therebetween. Conversely, when a portion is referred to as being "directly on" another portion, it means that no other portion is present therebetween.

A "layer" includes not only a shape formed on an entire surface but also a shape formed on a partial surface when observed in a plan view.

An average particle diameter may be measured by a method widely known to those skilled in the art, and for example, it may be measured by a particle size analyzer, or may be measured from a transmission electron microscope image or a scanning electron microscope image. Alternatively, an average particle diameter value may be obtained by measuring using a dynamic light scattering method, performing data analysis to count the number of particles for each particle size range, and calculating therefrom. Unless otherwise defined, the average particle diameter may mean a diameter (D₅₀) of particles having a cumulative volume of 50 volume% in a particle size distribution. In addition, unless otherwise defined, the average particle diameter may be obtained by measuring sizes (diameters or major axis lengths) of about 20 particles randomly from a transmission electron microscope image to obtain a particle size distribution, and taking a diameter (D₅₀) of particles having a cumulative volume of 50 volume% in the particle size distribution as the average particle diameter.

"Or" is not interpreted in an exclusive sense, and for example, "A or B" is interpreted as including A, B, A+B, and the like.

"Metal" is interpreted as a concept including common metals, transition metals, and metalloids (semi-metals).

### Catalyst for an oxygen evolution reaction

In the present specification, the catalyst for an oxygen evolution reaction refers to a catalyst applied to an electrode at which the oxygen evolution reaction (OER) occurs (hereinafter, referred to as an oxygen evolution electrode). That is, it refers to a catalyst included in the oxygen evolution electrode to be described later.

In one embodiment, a catalyst for an oxygen evolution reaction of a water electrolysis cell comprises a support containing a fluorine-doped metal oxide; and water electrolysis catalyst particles positioned on a surface of the support and containing a fluorine-doped noble metal or a fluorine-doped noble metal oxide, wherein a content of fluorine is 1 at% to 20 at% based on a total of 100 at% of components measured by high-resolution TEM energy dispersive X-ray spectrum analysis (TEM-EDS) in the entire fluorine-doped metal oxide, and a content of fluorine is 1 at% to 20 at% based on a total of 100 at% of components measured by high-resolution TEM energy dispersive X-ray spectrum analysis (TEM-EDS) in the entire fluorine-doped noble metal or fluorine-doped noble metal oxide.

Performance and durability of the catalyst for an oxygen evolution reaction may be improved according to types, forms, and contents of the support and the water electrolysis catalyst particles.

A noble metal or a noble metal oxide is used as a catalyst for an oxygen evolution reaction in a polymer electrolyte membrane water electrolysis cell, and research on supporting a noble metal oxide catalyst on a support is actively being conducted to reduce a content of an expensive noble metal oxide and increase a specific surface area, but due to low electrical conductivity of the support, there is a problem that a high content of a noble metal must be supported, and to reduce the content of the noble metal, development of a support capable of supplementing the low electrical conductivity is needed. Accordingly, one embodiment proposes a water electrolysis electrode that uses a fluorine-doped noble metal or a fluorine-doped noble metal oxide as an oxygen evolution reaction catalyst and a fluorine-doped metal oxide as a support, thereby solving the problems of difficulty in controlling the doping amount and achieving uniform fluorine doping caused by defluorination during the solvent synthesis process due to the excessively high reactivity of fluorine, and consequently improving electrochemical activity as the uniformly fluorine-doped noble metal or the uniformly fluorine-doped noble metal oxide reduces the energy of the rate-determining step of electrolysis due to the fluorine doping, while simultaneously achieving high electrical conductivity and electrochemical corrosion resistance through the fluorine-doped metal oxide support.

### Support

In one embodiment, a support contains a fluorine-doped metal oxide, and the metal may include, for example, tungsten (W), titanium (Ti), nickel (Ni), ruthenium (Ru), tantalum (Ta), tin Sn, cobalt (Co), or a combination thereof. Accordingly, the metal oxide may include tungsten oxide, titanium oxide, nickel oxide, ruthenium oxide, tantalum oxide, tin oxide, cobalt oxide, or a combination thereof, and preferably may include tin oxide. When the catalyst for an oxygen evolution reaction of a water electrolysis cell comprises the support, low electrical conductivity of the water electrolysis catalyst particles containing a noble metal oxide is supplemented, thereby providing an advantage of exhibiting high catalytic activity even when a content of a noble metal is low. In addition, since fluorine is doped in the metal oxide included in the support, it is possible to prevent performance of a membrane electrode from being degraded by elution of the doped fluorine or a metal of the metal oxide in a water electrolysis operating environment.

The support may have various shapes, for example, a shape of a sphere, a wire, or a rod, and preferably may have a shape of a sphere. The support may be in a form of secondary particles in which primary particles are agglomerated, and an average particle diameter (D₅₀) of the primary particles may be 0.005 µm to 0.5 µm, for example, 0.007 µm to 0.4 µm, 0.009 µm to 0.3 µm, or 0.01 µm to 0.2 µm, and an average particle diameter (D₅₀) of the secondary particles may be 0.05 µm to 1.0 µm, for example, 0.08 µm to 0.9 µm, or 0.1 µm to 0.8 µm. The primary particles may be crystallite particles or grains. A plurality of primary particles may form grain boundaries and agglomerate together to form secondary particles, and the primary particles may have various forms such as a spherical shape or pseudo-spherical shape (flake shape, etc.). The average particle diameter may be obtained by randomly measuring sizes (diameters or major axis lengths) of about 20 particles in a scanning electron microscope image of the support to obtain a particle size distribution, and taking a diameter (D₅₀) of particles having a cumulative volume of 50 volume% in the particle size distribution as the average particle diameter. In one embodiment, a catalyst for an oxygen evolution reaction of a water electrolysis cell may have a form in which water electrolysis catalyst particles, which will be described later, are positioned on a surface of the support, and accordingly, may form a conductive network, thereby reducing a sheet resistance of an electrode and improving performance of the water electrolysis cell.

In one embodiment, the support may be included in an amount of 20 wt% to 80 wt%, for example, 25 wt% to 65 wt%, or 30 wt% to 50 wt%, based on 100 wt% of a total of the support and the water electrolysis catalyst particles. When contents of the support and the water electrolysis catalyst particles are as described above, the catalyst for an oxygen evolution reaction of the water electrolysis cell comprising the same may form a conductive network, thereby reducing a sheet resistance of an electrode and improving performance of the water electrolysis cell.

In one embodiment, a content of fluorine based on a total of 100 at% of components measured by high-resolution TEM energy dispersive X-ray spectrum analysis (TEM-EDS) in the entire fluorine-doped metal oxide is 1 at% to 20 at%, and may be, for example, 1 at% to 15 at%, 1 at% to 12 at%, 4 at% to 12 at%, or 8 at% to 12 at%. When the fluorine content in the entire fluorine-doped metal oxide satisfies the above range, it may be possible to uniformly dope fluorine, thereby reducing a sheet resistance of an electrode and improving performance of the water electrolysis cell.

### Water electrolysis catalyst particles

In one embodiment, water electrolysis catalyst particles are positioned on a surface of the aforementioned support and contain a fluorine-doped noble metal or a fluorine-doped noble metal oxide. The noble metal may be a non-platinum based precious metal, and for example, the non-platinum based precious metal may include palladium (Pd), ruthenium (Ru), iridium Ir, an alloy thereof, or a combination thereof. A noble metal oxide according to an embodiment may include IrOₓ (x is an integer of 1 to 3), RuOₓ (x is an integer of 1 to 3), PdOₓ (x is an integer of 1 to 3), IrMOₓ (M includes Ru, Sn, Ti, Te, Nb, or a combination thereof, and x is an integer of 1 to 3), or a combination thereof. When the water electrolysis catalyst particles comprise the noble metal oxide, there is an advantage of exhibiting high catalytic activity.

An average particle diameter (D₅₀) of the water electrolysis catalyst particles may be 0.001 µm to 0.015 µm, and for example, may be 0.002 µm to 0.012 µm, or 0.004 µm to 0.01 µm. The average particle diameter may be obtained by randomly measuring sizes (diameters or lengths of major axes) of about 20 particles in a scanning electron microscope image of the water electrolysis catalyst particles to obtain a particle size distribution, and taking a diameter (D₅₀) of particles having a cumulative volume of 50 volume% in the particle size distribution as the average particle diameter. A catalyst for an oxygen evolution reaction of a water electrolysis cell according to an embodiment may be in a form in which the water electrolysis catalyst particles are positioned on a surface of the aforementioned support, and accordingly, may form a conductive network, thereby reducing a sheet resistance of an electrode and improving a performance of the water electrolysis cell.

Based on 100 wt% of a total of the support and the water electrolysis catalyst particles, the water electrolysis catalyst particles may be included in an amount of 20 wt% to 80 wt%, and for example, may be included in an amount of 40 wt% to 75 wt%, or 50 wt% to 70 wt%. When contents of the support and the water electrolysis catalyst particles are as described above, the catalyst for an oxygen evolution reaction including the same may form a conductive network, thereby reducing a sheet resistance of an electrode and improving a performance of the water electrolysis cell.

A content of fluorine is 1 at% to 20 at%, and for example, may be 2 at% to 19 at%, or 3 at% to 10 at% based on a total of 100 at% of components measured by high-resolution TEM energy dispersive X-ray spectrum analysis (EDS) in the entire fluorine-doped noble metal oxide. When the fluorine content in the entire fluorine-doped noble metal oxide satisfies the above range, it becomes possible to uniformly dope fluorine, which reduces energy of a rate-determining step of electrolysis to consequently improve electrochemical activity, thereby improving a performance of the water electrolysis cell.

A catalyst for an oxygen evolution reaction of a water electrolysis cell according to an embodiment may be manufactured by doping a support comprising a metal oxide and water electrolysis catalyst particles comprising a noble metal or a noble metal oxide with fluorine in a one-pot process, such that the water electrolysis catalyst particles comprising the noble metal or the noble metal oxide are supported in a state in which the fluorine doping is maintained, whereby the catalyst for an oxygen evolution reaction of a water electrolysis cell exhibits improved catalytic activity and simultaneously improved electrical conductivity. On the other hand, when the water electrolysis catalyst particles are supported after manufacturing a support containing a fluorine-doped metal oxide, a highly reactive fluorine dopant is defluorinated during a supporting process of the water electrolysis catalyst particles, so that the fluorine doping is not maintained, thereby causing a loss of electrical conductivity and a decrease in water electrolysis performance.

### Oxygen evolution electrode

The oxygen evolution electrode refers to an electrode in which an oxygen evolution reaction (OER) occurs, and the oxygen evolution electrode may comprise the catalyst for an oxygen evolution reaction of the water electrolysis cell. Since the catalyst for an oxygen evolution reaction of a water electrolysis cell has been described above, a description thereof will be omitted.

The oxygen evolution electrode may comprise the catalyst for an oxygen evolution reaction in an amount of 60 wt% to 95 wt% based on 100 wt% of a total of the oxygen evolution electrode, and for example, may comprise the same in an amount of 65 wt% to 85 wt%, or 70 wt% to 95 wt%,

The oxygen evolution electrode may further comprise an ion conductor to improve adhesion of the catalyst and transfer hydrogen ions, and the ion conductor may comprise a cation exchange group to secure ion conductivity. In this case, the oxygen evolution electrode may comprise the ion conductor in an amount of 1 wt% to 25 wt% based on 100 wt% of a total of the oxygen evolution electrode, and for example, may comprise the same in an amount of 2 wt% to 20 wt%, or 3 wt% to 18 wt%.

The cation exchange group may be a sulfonic acid group, a carboxyl group, a boronic acid group, a phosphoric acid group, a phosphonic acid group, an imide group, a sulfonimide group, a sulfonamide group, or a sulfonic acid fluoride.

The ion conductor may be a fluorine-based ion conductor, a hydrocarbon-based ion conductor, or a mixture thereof. The fluorine-based ion conductor may be a fluorine-based polymer having the cation exchange group in a side chain and containing fluorine in a main chain, for example, poly(perfluorosulfonic acid), poly(perfluorocarboxylic acid), and the like. The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and the like].

According to an embodiment, the ion conductor may have hydrogen ion conductivity. In the ion conductor having hydrogen ion conductivity, H in the cation exchange group at a side chain terminal may be substituted with Na, K, Li, Cs, or tetrabutylammonium. When substituting H with Na in the ion exchange group at the end of the side chain, NaOH is used for substitution during the preparation of a catalyst composition, when substituting with tetrabutylammonium, tetrabutylammonium hydroxide is used for substitution, and K, Li, or Cs may also be substituted using an appropriate compound. Since this substitution method is widely known in the art, a detailed description thereof will be omitted.

The ion conductor may be used in the form of a single substance or a mixture, and may also optionally be used together with a non-conductive compound for the purpose of further improving adhesion to a polymer electrolyte membrane. A content of the non-conductive compound may be appropriately adjusted according to the intended use. As the non-conductive compound, at least one selected from polytetrafluoroethylene (PTFE), tetrafluoroethylene-hexafluoropropylene copolymer (FEP), tetrafluoroethylene-perfluoroalkyl vinyl ether copolymer (PFA), ethylene/tetrafluoroethylene (ETFE), ethylene chlorotrifluoro-ethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

### Method of manufacturing an oxygen evolution electrode

According to an embodiment, a method of manufacturing an oxygen evolution electrode of a water electrolysis cell comprises (i) mixing a metal oxide into a solution including a noble metal oxide precursor, and then drying it to manufacture a dried product; (ii) mixing the dried product and a fluorine precursor, and then heat-treating them to manufacture a catalyst for an oxygen evolution reaction of the water electrolysis cell; (iii) mixing the catalyst for an oxygen evolution reaction of the water electrolysis cell and an ionomer to manufacture a slurry; and (iv) dispersing the slurry.

According to a method of manufacturing an oxygen evolution electrode for a water electrolysis cell according to an embodiment, a mixture of a support containing a metal oxide and water electrolysis catalyst particles containing a noble metal or a noble metal oxide is simultaneously fluorine-doped through a one-pot process. By simultaneously doping fluorine into the water electrolysis catalyst particles and the support, the energy of the rate-determining step of the electrolysis of the noble metal or the noble metal oxide is reduced, thereby improving electrochemical activity. Consequently, a water electrolysis electrode having high electrical conductivity and electrochemical corrosion resistance may be manufactured through the support containing the fluorine-doped metal oxide. On the other hand, when water electrolysis catalyst particles containing a noble metal or a noble metal oxide are supported after manufacturing a support containing a fluorine-doped metal oxide, a highly reactive fluorine dopant is defluorinated during a supporting process of the water electrolysis catalyst particles, so that the fluorine doping is not maintained, thereby causing a loss of electrical conductivity and a decrease in water electrolysis performance, and there is also a problem in that an additional process is required for fluorine doping into the water electrolysis catalyst particles containing the noble metal or the noble metal oxide.

In one embodiment, in the step (i) of mixing a metal oxide into the solution including the noble metal oxide precursor, and then drying it to manufacture the dried product, the noble metal oxide precursor may include IrCl₃, an IrCl₃ hydrate, IrCl₄, H₂Cl₆Ir, Ir(CH₃COO)₃, or a combination thereof, and preferably may be an IrCl₃ hydrate. In addition, a type of a solvent necessary for manufacturing the solution is not limited as long as it may dissolve the noble metal oxide precursor. For example, the solvent may include water, an alcohol, ethylene glycol, or a combination thereof, and the alcohol may be methanol, ethanol, butanol, or isopropanol.

Based on 100 wt% of a total of the noble metal oxide precursor and the metal oxide in the step (i), the noble metal oxide precursor may be included in an amount of 25 wt% to 88 wt%, for example, 31 wt% to 84 wt%, or 57 wt% to 81 wt%. When the content of the noble metal oxide precursor is included in the above range, the catalyst for an oxygen evolution reaction of the water electrolysis cell including the same may form a conductive network to reduce a sheet resistance of an electrode, and improve a performance of the water electrolysis cell.

In the dried product, the support containing the metal oxide may be in the form of primary particles. In this case, the primary particles may have various forms of a spherical shape or a pseudo-spherical shape (flake shape, etc.), and the average particle diameter (D₅₀) of the primary particles may be 0.005 µm to 0.5 µm, for example, 0.007 µm to 0.4 µm, 0.009 µm to 0.3 µm, or 0.01 µm to 0.2 µm.

In one embodiment, in the step (ii) of mixing the dried product and the fluorine precursor, and then heat-treating to manufacture the catalyst for an oxygen evolution reaction of the water electrolysis cell, the fluorine precursor may include NH₄F, NH₄HF₂, or a combination thereof, and preferably may be NH₄F. In this case, the molar ratio of the dried product and the fluorine precursor may be included at 1:1 to 1:30, for example, 1:1 to 1:20, 1:2 to 1:20, 1:3 to 1:20, 1:8 to 1:20, 1:13 to 1:20, or 1:18 to 1:20. When the molar ratio of the dried product and the fluorine precursor is included in the range, an amount of doped fluorine may be easily adjusted, so that it becomes possible to uniformly dope fluorine, thereby reducing a sheet resistance of an electrode and improving a performance of the water electrolysis cell.

After performing a mixing process of the dried product and the fluorine precursor, a heat-treating process may be performed. The heat-treating may be performed in an inert gas atmosphere or a reducing gas atmosphere, a heat-treating temperature may be 80°C to 450°C, 100°C to 430°C, or 120°C to 400°C, and a time for which the heat-treating process is performed may be 4 hours to 8 hours, 4.5 hours to 7.5 hours, or 5 hours to 7 hours.

In the catalyst for an oxygen evolution reaction of the water electrolysis cell, manufactured by mixing the dried product and the fluorine precursor and then heat-treating, the support containing the fluorine-doped metal oxide may be secondary particles. In this case, the secondary particles may be formed by a plurality of primary particles forming grain boundaries and aggregating with each other, and the average particle diameter (D₅₀) of the secondary particles may be 0.05 µm to 1.0 µm, for example, 0.08 µm to 0.9 µm, or 0.1 µm to 0.8 µm.

In one embodiment, in the step (iii) of mixing the catalyst for an oxygen evolution reaction of the water electrolysis cell and the ionomer to manufacture a mixture, the ionomer may be a cation conductor having a cation exchange group capable of exchanging cations, or an anion conductor having an anion exchange group capable of exchanging anions such as hydroxy ions, carbonates, or bicarbonates.

The cation exchange group may be any one selected from the group consisting of a sulfonic acid group, a carboxyl group, a boronic acid group, a phosphoric acid group, an imide group, a sulfonimide group, a sulfonamide group, and a combination thereof, and generally may be a sulfonic acid group or a carboxyl group.

The cation conductor may include the cation exchange group, and may include a fluorine-based polymer including fluorine in a main chain; a hydrocarbon-based polymer such as benzimidazole, polyamide, polyamideimide, polyimide, polyacetal, polyethylene, polypropylene, acrylic resin, polyester, polysulfone, polyether, polyetherimide, polyethersulfone, polycarbonate, polystyrene, polyphenylene sulfide, polyether ether ketone, polyether ketone, polyaryl ether sulfone, polyphosphazene, or polyphenylquinoxaline; a partially fluorinated polymer such as a polystyrene-graft-ethylenetetrafluoroethylene copolymer or a polystyrene-graft-polytetrafluoroethylene copolymer; sulfone imide, and the like.

In addition, in the cation conductor, H in the cation exchange group at a side chain terminal may be substituted with Na, K, Li, Cs, or tetrabutylammonium. When substituting H with Na in the cation exchange group at the end of the side chain, NaOH is used for substitution during the preparation of a carbon structure composition, when substituting with tetrabutylammonium, tetrabutylammonium hydroxide is used for substitution, and K, Li, or Cs may also be substituted using an appropriate compound.

As the anion conductor, a polymer doped with a metal hydroxide may generally be used, and specifically, poly(ethersulfone), polystyrene, a vinyl-based polymer, poly(vinyl chloride), poly(vinylidene fluoride), poly(tetrafluoroethylene), poly(benzimidazole), poly(ethylene glycol), or the like doped with a metal hydroxide may be used.

Based on 100 wt% of a total of the catalyst for an oxygen evolution reaction of the water electrolysis cell and the ionomer, the ionomer may be included in an amount of 10 to 45 wt%, for example, 10 to 40 wt%, 10 to 35 wt%, or 10 to 33 wt%. When a content of the ionomer is included in the range, there is an advantage in that performance of the water electrolysis cell may be improved, and at the same time, aggregation between the ionomers due to an excess of the ionomer may be suppressed.

In one embodiment, in the step (iv) of dispersing the slurry, it may be manufactured through any one dispersion method selected from ultrasonic dispersion, stirring, 3-roll milling, ball milling, planetary stirring, high-pressure dispersion, and a mixing method thereof.

### Membrane-electrode assembly for a water electrolysis cell

A membrane-electrode assembly for a water electrolysis cell according to an embodiment comprises a polymer electrolyte membrane, an oxygen evolution electrode positioned on one surface of the polymer electrolyte membrane; and a hydrogen evolution electrode positioned on the other surface of the polymer electrolyte membrane.

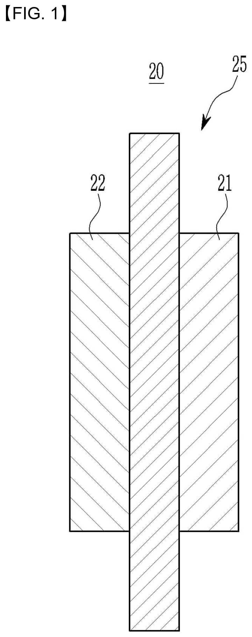

The membrane-electrode assembly for a water electrolysis cell is illustrated in FIG. 1. The membrane-electrode assembly for a water electrolysis cell (20) according to FIG. 1 comprises a polymer electrolyte membrane (25); the oxygen evolution electrode (21) positioned on one surface of the polymer electrolyte membrane; and the hydrogen evolution electrode (22) positioned on the other surface of the polymer electrolyte membrane.

Since the oxygen evolution electrode has been described above, a detailed description thereof will be omitted, and the hydrogen evolution electrode and the polymer electrolyte membrane will be described in detail.

The hydrogen evolution electrode refers to an electrode on which a hydrogen evolution reaction (HER) occurs, and the hydrogen evolution electrode may comprise a catalyst for a hydrogen evolution reaction. The catalyst for a hydrogen evolution reaction may comprise active particles and a support, the active particles may include a noble metal, and the noble metal may be a platinum-based noble metal.

As the platinum-based noble metal (platinum based precious metal), platinum (Pt) and/or a Pt-M alloy may be used. The M may be palladium (Pd), ruthenium (Ru), iridium Ir, osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support. The carbon-based support may be graphite, super P, carbon fiber, carbon sheet, carbon black, Ketjen Black, Denka black, acetylene black, carbon nano tube (CNT), carbon sphere, carbon ribbon, fullerene, activated carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, or a combination thereof.

The oxygen evolution electrode and the hydrogen evolution electrode may each comprise only a catalyst layer comprising the catalyst for an oxygen evolution reaction and the catalyst for a hydrogen evolution reaction, respectively, but may further comprise an electrode substrate together with the catalyst layer. In this case, the electrode substrate may serve to diffuse a fuel and an oxidant to the catalyst layer while serving to support the electrode. The electrode substrate is not particularly limited, and any known electrode substrate may be used. Specifically, the electrode substrate may be carbon paper, carbon cloth, carbon felt, or metal cloth (referring to a porous film constituted by a metal cloth in a fibrous state or a metal film formed on a surface of a cloth formed of polymer fibers) that may be used as a conductive substrate. As the electrode substrate, one treated to be water-repellent with a fluorine-based resin may be used, and in this case, it may prevent reactant diffusion efficiency from being reduced by water generated during operation of the water electrolysis cell. As the fluorine-based resin, polytetrafluoroethylene, polyvinylidene fluoride, polyhexafluoropropylene, polyperfluoroalkyl vinyl ether, polyperfluorosulfonyl fluoride, alkoxy vinyl ether, fluorinated ethylene propylene, polychlorotrifluoroethylene, or a copolymer thereof may be used.

The oxygen evolution electrode and the hydrogen evolution electrode may comprise a microporous layer in addition to the above-described catalyst layer and the electrode substrate. The microporous layer may perform a role of enhancing a reactant diffusion effect, and may generally include a conductive powder having a small particle diameter, for example, carbon powder, carbon black, acetylene black, activated carbon, carbon fiber, fullerene, carbon nanotube, carbon nanowire, carbon nano-horn, or carbon nano ring.

### Polymer electrolyte membrane

The polymer electrolyte membrane has an ion exchange function of transporting hydrogen ions generated in the oxygen evolution electrode to the catalyst for a hydrogen evolution reaction. A polymer electrolyte membrane according to an embodiment may include a porous support including a plurality of pores, and an ion conductor filling the pores of the porous support.

The porous support may be a fluorine-based support or a nano-web support. The fluorine-based support may correspond to, for example, expanded polytetrafluoroethylene (e-PTFE) having a microstructure of polymer fibrils, or a microstructure in which nodes are connected to each other by fibrils. In addition, a film having a microstructure of polymer fibrils in which the nodes do not exist may also be used as the porous support.

The fluorine-based support may include a perfluorinated polymer. The porous support may be formed by extruding dispersion polymerized PTFE into a tape in the presence of a lubricant and stretching a material obtained thereby to result in a more porous and stronger porous support. In addition, an amorphous content of the PTFE may be increased by heat-treating the e-PTFE at a temperature exceeding a melting point (about 342°C) of the PTFE. The e-PTFE film manufactured by the method may have micropores having various diameters and a porosity. The e-PTFE film manufactured by the method may have porosity of at least 35%, and a diameter of the micropores may be about 0.01 to 1 µm (micrometers).

The nanoweb support may be a non-woven fibrous web consisting of a plurality of randomly oriented fibers. The non-woven fibrous web refers to a sheet having a structure of individual fibers or filaments that are interlaid, but not in the same manner as a woven cloth. The non-woven fibrous web may be manufactured by carding, garneting, air-laying, wet-laying, melt blowing, spun bonding, or stitch bonding.

The fibers may comprise one or more polymer materials, and any material generally used as a fiber-forming polymer material may be used, and specifically, a hydrocarbon-based fiber-forming polymer material may be used. For example, the fiber-forming polymer material may include polyolefins such as polybutylene, polypropylene, and polyethylene, polyesters such as polyethylene terephthalate and polybutylene terephthalate, polyamides (nylon-6 and nylon-6,6), polyurethane, polybutene, polylactic acid, polyvinyl alcohol, polyphenylene sulfide, polysulfone, fluid crystalline polymers, polyethylene-co-vinylacetate, polyacrylonitrile, cyclic polyolefins, polyoxymethylene, polyolefin-based thermoplastic elastomers, or a combination thereof.

The nanoweb support may be a support in which nanofibers are integrated into a non-woven fabric form including a plurality of pores.

As the nanofibers, a hydrocarbon-based polymer exhibiting excellent chemical resistance and having hydrophobicity so that there is no concern of shape deformation due to moisture in a high humidity environment may preferably be used. Specifically, as the hydrocarbon-based polymer, nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, copolymers thereof, or a mixture thereof may be used.

The nanoweb support is an aggregate of nanofibers in which nanofibers manufactured by electrospinning are randomly arranged. In this case, the nanofiber may have an average diameter of 40 nm to 5000 nm when calculated from an average of 50 fiber diameters measured using a scanning electron microscope (Scanning Electron Microscope, JSM6700F, JEOL) in consideration of a porosity and a thickness of the nanoweb. When the average diameter of the nanofibers is within the range, mechanical strength may be excellent, and an appropriate porosity may be secured.

A thickness of the non-woven fibrous web may be 10 µm to 50 µm or 15 µm to 43 µm. When the thickness of the non-woven fibrous web is within the range, mechanical strength, weight reduction, and integration may be excellent. The non-woven fibrous web may have a basic weight of 5 to 30 mg/cm². When the basis weight of the non-woven fibrous web is less than the numerical range, visible pores may be formed, and thus it may be difficult to function as a porous support, and when the basic weight is greater than the numerical range, it may be manufactured like a form of paper or a woven cloth in which pores are hardly formed. The porosity may be calculated by a ratio of an air volume in the porous support to a total volume of the porous support according to Equation 1 below.

At this time, the total volume may be calculated by preparing a rectangular-shaped sample and measuring a width, a length, and a thickness, and the air volume may be obtained by measuring a mass of the sample and then subtracting a polymer volume inversely calculated from a density from the total volume. [Equation 1] 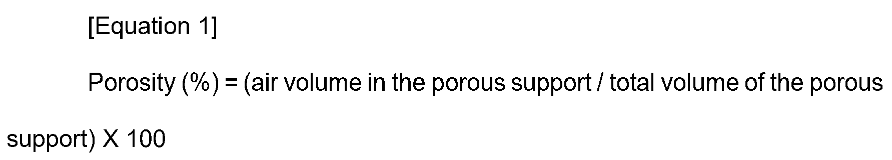 Porosity (%) = (air volume in the porous support / total volume of the porous support) X 100

For example, the porosity of the porous support may correspond to 30 to 90 %. When the porosity of the porous support is within the range, a problem of deterioration of impregnability of the ion conductor or a problem in which a post-process does not proceed smoothly due to deterioration of stability may not occur.

The ion conductor is as described above. The ion conductor included in the polymer electrolyte membrane may be the same as or different from the ion conductor included in the oxygen evolution electrode, and for example, the ion conductor included in the polymer electrolyte membrane may be the same as the ion conductor included in the oxygen evolution electrode.

### Water electrolysis cell

In one embodiment, a water electrolysis cell comprises the membrane-electrode assembly for a water electrolysis cell.

Since the water electrolysis cell is the same as a known one except for comprising the membrane-electrode assembly according to an present application, a detailed description thereof will be omitted.

### [Mode for Invention]

Hereinafter, Examples and Comparative Examples of the present invention will be described. The following Examples are only examples of the present invention, and the present invention is not limited to the following Examples.

### Example 1

### 1. Preparation of a catalyst for an oxygen evolution reaction

1 g of SnO₂ powder is mixed into a solution in which 0.3 g of iridium chloride hydrate is dissolved in 0.5 ml of ethanol, and then dried at 60°C to prepare a dried product. The prepared dried product and 5 g of NH₄F, which is a fluorine precursor, are mixed such that a molar ratio of SnO₂ and NH₄F is 1:20, and the resulting mixture is homogeneously mixed to a particle size of 150 µm to prepare a mixture. Here, the amount of doped fluorine may be controlled by controlling the amounts of the fluorine precursor and the prepared SnO₂ powder. The prepared mixture was heat-treated in an inert gas atmosphere or a reducing gas atmosphere at a temperature of 400°C for 6 hours, and the heat-treated powder was washed and filtered using ethanol and distilled water, and then dried at a temperature of 60°C for 12 hours to manufacture a catalyst for an oxygen evolution reaction.

### 2. Manufacture of a membrane-electrode assembly comprising a catalyst for an oxygen evolution reaction

The prepared catalyst for an oxygen evolution reaction and an ionomer solution are mixed such that the ionomer/catalyst ratio is 0.3. The mixed catalyst slurry was dispersed and stirred for 24 hours to manufacture a catalyst composition for an oxygen evolution reaction. The catalyst composition for an oxygen evolution reaction is referred to as a first catalyst composition.

A catalyst having a content of platinum particles of 46 wt% on a graphite support and an ionomer solution were mixed such that the ionomer/carbon ratio became 1.0 to manufacture a second catalyst composition. A first electrode was manufactured by thinly applying the first catalyst composition on a transfer substrate via spray, decal, or ultrasonic spray coating, and a second electrode was manufactured by applying the second catalyst composition on another transfer substrate, and then a membrane-electrode assembly was manufactured by transferring the first electrode to one side of a polymer electrolyte membrane, and transferring and bonding the second electrode to the opposite side thereof.

### Example 2

In the manufacture of the catalyst for an oxygen evolution reaction, a catalyst for an oxygen evolution reaction and a membrane-electrode assembly were manufactured in substantially the same manner as in Example 1, except that the molar ratio of SnO₂ and NH₄F was designed to be 1:6 by using 1.5 g of NH₄F, which is a fluorine precursor.

### Example 3

In the manufacture of a catalyst for an oxygen evolution reaction, a catalyst for an oxygen evolution reaction and a membrane-electrode assembly were manufactured in substantially the same manner as in Example 1, except that a molar ratio of SnO2 and NH₄F was designed to be 1:1 by using 0.15 g of NH₄F, which is a fluorine precursor.

### Comparative Example 1

After 1.28 g of tetradecylamine (C₁₄H₃₁N) (95%) is dissolved in 22.5 ml of an ethanol aqueous solution (ethanol:water=1:2.5), 20 ml of ethanol in which 4.8 g of tin tetrachloride (SnCl₄) and 0.48 g of NH₄F as a fluorine precursor are dissolved is added and mixed for 1 hour. Next, the mixture is mixed with 200 ml of a 1.5 mM ammonia solution, refluxed at 80°C for 72 hours, washed using centrifugation, and dried using a thermal drying or freeze-drying method. The thus-dried powder is heat-treated in an air atmosphere at a temperature of 400°C for 3 hours to obtain a fluorine-doped SnO₂ powder.

After 1 g of the prepared fluorine-doped SnO2 powder is dispersed in a solution in which 0.074 g of iridium acetate (Ir(CH₃COO)₃) and 0.08 g of sodium hydroxide are dissolved in ₂0 ml of ethylene glycol, the mixture is reacted at 160°C for 1 hour in an inert gas atmosphere and then cooled. Thereafter, the product is washed by centrifugation, and then dried by a thermal or freeze-drying method to manufacture a final catalyst.

### Comparative Example 2

After 1 g of a SnO₂ powder is dispersed in 22.5 ml of an ethanol aqueous solution (ethanol:water=1:2.5), 20 ml of ethanol in which 0.48 g of NH₄F as a fluorine precursor is dissolved is added and mixed for 1 hour, refluxed at 80°C for 72 hours, washed using centrifugation, and dried using a thermal drying or freeze-drying method. The thus-dried powder is heat-treated in an air atmosphere at a temperature of 400°C for 3 hours to obtain a fluorine-doped SnO₂ powder.

After 1 g of the prepared fluorine-doped SnO2 powder is dispersed in a solution in which 0.074 g of iridium acetate (Ir(CH₃COO)₃) and 0.08 g of sodium hydroxide are dissolved in ₂0 ml of ethylene glycol, the mixture is reacted at 160°C for 1 hour in an inert gas atmosphere and then cooled. Thereafter, the product is washed by centrifugation, and then dried by a thermal or freeze-drying method to manufacture a final catalyst.

### Evaluation Example 1: Fluorine Content Analysis

In the supports manufactured in the Examples and Comparative Examples, in order to confirm the fluorine content of the fluorine-doped metal oxide, the fraction of fluorine atoms in the entire fluorine-doped metal oxide was measured by high-resolution TEM energy dispersive X-ray spectrum analysis (TEM-EDS), and the results are shown in Table 1.

Next, in the water electrolysis catalyst particles manufactured in the Examples and Comparative Examples, in order to confirm the fluorine content of the fluorine-doped noble metal oxide, the fraction of fluorine atoms in the entire fluorine-doped noble metal oxide was measured by high-resolution TEM energy dispersive X-ray spectrum analysis (TEM-EDS), and the results are shown in Table 1.

**[Table 1]**

| | Fluorine content in support (at%) | Fluorine content in water electrolysis catalyst particles (at%) |
|---|---|---|
| Example 1 | 10.1 | 9.2 |
| Example 2 | 6.3 | 4.0 |
| Example 3 | 1.1 | 0.9 |
| Comparative Example 1 | 0.1 | 0 |
| Comparative Example 2 | 0 | 0 |

Referring to Table 1, it may be confirmed that when fluorine doping is performed on the mixture of SnO₂ and IrOₓ synthesized according to Examples 1 to 3 in a one-pot process, the amount of fluorine doping may be controlled. On the other hand, in the case of Comparative Example 1, in which fluorine is doped in a process of synthesizing SnO₂ and IrOx is supported on the fluorine-doped SnO₂, or Comparative Example 2, in which fluorine is doped into synthesized SnO₂ and IrOₓ is supported on the fluorine-doped SnO₂, it may be confirmed that fluorine doping is not smoothly performed.

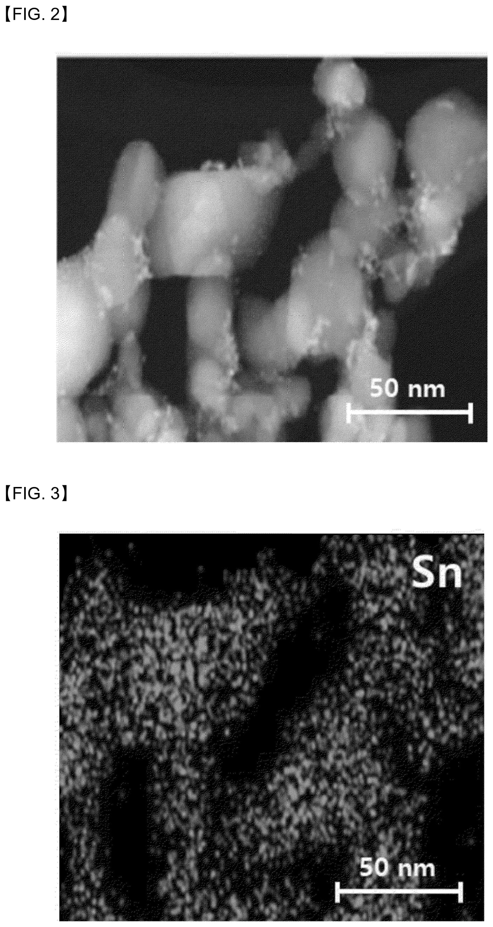

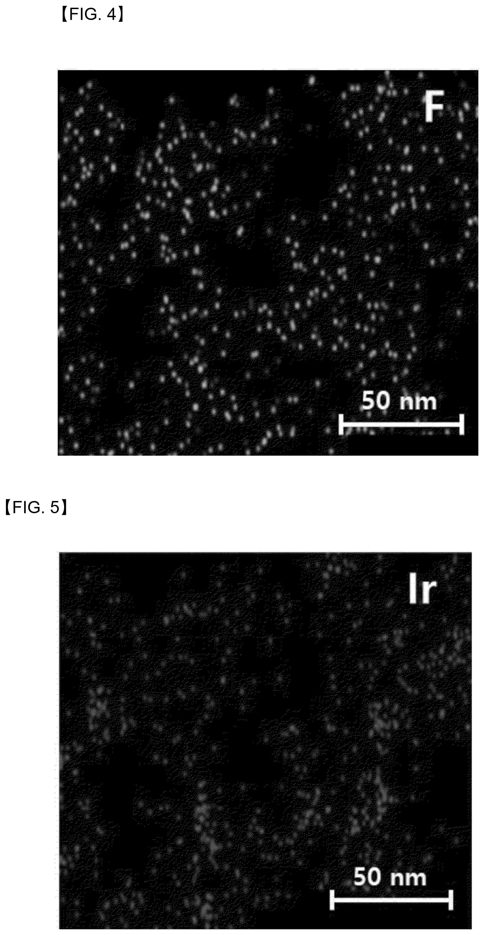

In order to confirm the structure of the IrOx/FTO manufactured in a one-pot process in Example 1, the IrOx/FTO was observed using scanning transmission electron microscopy (STEM) and energy dispersive X-ray spectroscopy (EDS) mapping analysis, and the results are shown in FIGS. 2 to 5.

Referring to FIGS. 2 to 5, from the STEM images and energy dispersive X-ray spectroscopy (EDS) mapping analysis of the IrOx/FTO, it was confirmed that fluorine was evenly distributed in the IrOx/FTO through the one-pot process, and at the same time, it was confirmed that the Ir catalyst was well supported on the tin Sn oxide.

### Evaluation Example 2: Electrical Conductivity Evaluation

The first electrodes manufactured in the Examples and Comparative Examples were cut into 2 cm x 2 cm, electrodes were formed at both corners using silver plates, and a sheet resistance was measured by a van der pauw sheet resistance measurement method to evaluate electrical conductivity, and the results are shown in Table 2.

**[Table 2]**

| | Electrical conductivity (mS/cm) |
|---|---|
| Example 1 | 16.26 |
| Example 2 | 6.69 |
| Example 3 | 3.38 |
| Comparative Example 1 | 0.001 |
| Comparative Example 2 | 0.0006 |

Referring to Table 2, in the case where fluorine doping is performed on the mixture of SnO₂ and IrOₓ synthesized according to Examples 1 to 3 in a one-pot process, it may be confirmed that the electrical conductivity is excellent compared to the cases of Comparative Example 1, in which fluorine is doped in a process of synthesizing SnO₂ and IrOx is supported on the fluorine-doped SnO₂, or Comparative Example 1, in which fluorine is doped into synthesized SnO₂ and IrOₓ is supported on the fluorine-doped SnO₂.

### Evaluation Example 3: Water Electrolysis Performance Evaluation

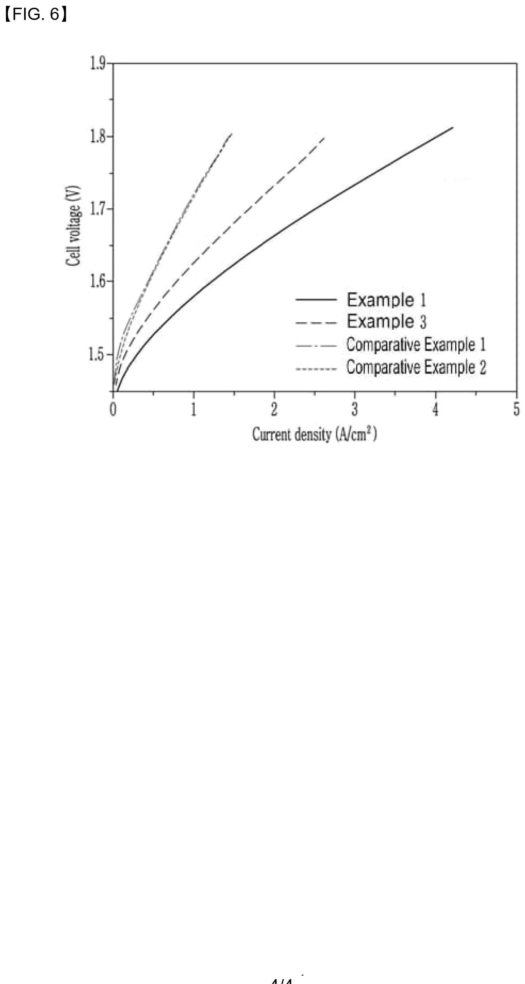

Distilled water was supplied to the membrane-electrode assemblies manufactured in the Examples and Comparative Examples at a flow rate of 5 ml/min at 80°C, and water electrolysis performance was evaluated by applying a protocol for measuring current and resistance at a voltage of up to 2 V by linear sweep voltammetry at 10 mV/s, and the results are shown in FIG. 6.

Referring to FIG. 6, it may be confirmed that the water electrolysis performance is improved in Example 1 and Example 3 in which fluorine doping is smoothly performed, compared to Comparative Example 1 and Comparative Example 2 in which fluorine doping is not smoothly performed. In addition, as the fluorine doping amount increases, it may be confirmed that the water electrolysis performance of Example 1 is improved compared to Example 3.

Although the preferred embodiments have been described in detail above, the scope of the present invention is not limited thereto, and various modifications and improvements made by those skilled in the art using the basic concept defined in the following claims also fall within the scope of the present invention.

## Claims

1. A catalyst for an oxygen evolution reaction of a water electrolysis cell comprising:
a support containing a fluorine-doped metal oxide; and
water electrolysis catalyst particles positioned on a surface of the support and containing a fluorine-doped noble metal or a fluorine-doped noble metal oxide,
wherein a content of fluorine is 1 at% to 20 at% based on a total of 100 at% of components measured by high-resolution TEM energy dispersive X-ray spectrum analysis in the entire fluorine-doped metal oxide, and
a content of fluorine is 1 at% to 20 at% based on a total of 100 at% of components measured by high-resolution TEM energy dispersive X-ray spectrum analysis in the entire fluorine-doped noble metal or fluorine-doped noble metal oxide.

2. The catalyst for an oxygen evolution reaction of a water electrolysis cell of claim 1,
wherein the metal oxide includes tungsten oxide, titanium oxide, nickel oxide, ruthenium oxide, tantalum oxide, tin oxide, cobalt oxide, or a combination thereof.

3. The catalyst for an oxygen evolution reaction of a water electrolysis cell of claim 1,
wherein the metal oxide is tin oxide.

4. The catalyst for an oxygen evolution reaction of a water electrolysis cell of claim 1,
wherein the support has a shape of a sphere, a wire, or a rod.

5. The catalyst for an oxygen evolution reaction of a water electrolysis cell of claim 1,
wherein the support is in a form of secondary particles in which primary particles are agglomerated,
an average particle diameter (D₅₀) of the primary particles is 0.005 µm to 0.5 µm, and
an average particle diameter (D₅₀) of the secondary particles is 0.05 µm to 1.0 µm.

6. The catalyst for an oxygen evolution reaction of a water electrolysis cell of claim 1,
wherein the catalyst for an oxygen evolution reaction of a water electrolysis cell includes the support in an amount of 20 wt% to 80 wt% based on 100 wt% of a total of the support and the water electrolysis catalyst particles.

7. The catalyst for an oₓygen evolution reaction of a water electrolysis cell of claim 1,
wherein the noble metal oxide is IrOₓ (x is an integer of 1 to 3).

8. The catalyst for an oxygen evolution reaction of a water electrolysis cell of claim 1,
wherein an average particle diameter (D₅₀) of the water electrolysis catalyst particles is 0.001 µm to 0.015 µm.

9. An oxygen evolution electrode comprising the catalyst for an oxygen evolution reaction of a water electrolysis cell according to claim 1.

10. A method of manufacturing an oxygen evolution electrode comprising:
(i) mixing a metal oxide into a solution including a noble metal oxide precursor, and then drying it to manufacture a dried product;
(ii) mixing the dried product and a fluorine precursor, and then heat-treating to manufacture a catalyst for an oxygen evolution reaction of a water electrolysis cell;
(iii) mixing the catalyst for an oxygen evolution reaction of a water electrolysis cell and an ionomer to manufacture a slurry; and
(iv) dispersing the slurry.

11. The method of manufacturing an oxygen evolution electrode of claim 10,
wherein the noble metal oxide precursor includes IrCl₃, an IrCl₃ hydrate, IrCl₄, H₂Cl₆Ir, Ir(CH₃COO)₃, or a combination thereof.

12. The method of manufacturing an oxygen evolution electrode of claim 10,
wherein the fluorine precursor includes NH₄F, NH₄HF₂, or a combination thereof.

13. The method of manufacturing an oxygen evolution electrode of claim 10,
wherein in the step (ii), a molar ratio of the dried product and the fluorine precursor is included at 1:1 to 1:30.

14. A membrane-electrode assembly for a water electrolysis cell comprising:
a polymer electrolyte membrane;
the oxygen evolution electrode according to claim 9 positioned on one surface of the polymer electrolyte membrane; and
a hydrogen evolution electrode positioned on the other side of the polymer electrolyte membrane.

15. A water electrolysis cell comprising the membrane-electrode assembly for a water electrolysis cell according to claim 14.
